## Europäisches Patentamt
## European Patent Office
## Office européen des brevets

(19)

(11) Numéro de publication: **0 126 495**
**B1**

(12)
# FASCICULE DE BREVET EUROPÉEN

(45) Date de publication du fascicule du brevet:
**20.05.87**

(51) Int. Cl.⁴: **H 04 N 7/167,** H 04 N 11/06

(21) Numéro de dépôt: **84200256.0**

(22) Date de dépôt: **22.02.84**

(54) Dispositif de déchiffrement d'images de télévision brouillées par permutations circulaires.

(30) Priorité: **25.02.83 FR 8303112**

(43) Date de publication de la demande:
**28.11.84 Bulletin 84/48**

(45) Mention de la délivrance du brevet:
**20.05.87 Bulletin 87/21**

(84) Etats contractants désignés:
**DE FR GB SE**

(56) Documents cité:
**FR-A-2 431 809**

(73) Titulaire: **S.A. La Radiotechnique Industrielle et Commerciale, 51 Rue Carnot, F-92150 Suresnes (FR)**

(72) Inventeur: **Marie, Gérard, Société Civile S.P.I.D. 209 rue de l'Université, F-75007 Paris (FR)**
Inventeur: **Arragon, Jean- Pierre, Société Civile S.P.I.D. 209 rue de l'Université, F-75007 Paris (FR)**

(74) Mandataire: **Landousy, Christian, Société Civile S.P.I.D. 209, Rue de l'Université, F-75007 Paris (FR)**

LIBER, STOCKHOLM 1987

**0 126 495**

## Description

La présente invention concerne un nouveau dispositif de déchiffrement d'images de télévision brouillées à l'émission par application aux signaux vidéo, ou à des fractions de ces signaux, de permutations circulaires à partir d'adresses définies par un générateur de séquences numériques pseudoaléatoires.

Le principe du chiffrement d'images de télévision consiste à effectuer une coupure de la partie utile du signal de chaque ligne d'image en un point dont l'adresse x est aléatoire, puis à réaliser une permutation circulaire des segments situés de part et d'autre du point de coupure. Ce principe de chiffrement, appelé DISCRET, a été décrit dans la demande de brevet français n° 2 431 809, dans le cas où il s'applique à un signal vidéo couleur composite à multiplexage en fréquences, de type SECAM, PAL ou NTSC par exemple.

La demande de brevet français n° 2 533 099 déposée le 14 septembre 1982 au nom de la société La Radiotechnique décrit une application nouvelle de ce principe à un signal vidéo couleur à multiplexage temporel des composantes analogiques, de type MAC par exemple. Dans ce dernier cas, les différentes composantes sont traitées séparément, c'est-à-dire subissent chacune séparément les opérations de coupure et de permutation. Les adresses $x_i$ de points de coupure à fournir doivent alors être en nombre égal à celui des composantes: deux dans le cas du codage MAC (la luminance Y et, alternativement, l'une ou l'autre des composantes de différence de couleur U et V), trois dans le cas où l'on dispose à chaque ligne des trois composantes Y, U et V, etc...

Les adresses des points de coupure sont fournies par un générateur de séquences numériques pseudoaléatoires fonctionnant avec une horloge à la fréquence ligne et varient donc pseudoaléatoirement d'une ligne à la suivante. Des générateurs identiques sont utilisés à l'émission et à la réception, et la synchronisation entre émission et réception peut se faire soit à chaque trame d'image, soit après un nombre entier de trames (toutes les 50 trames par exemple, c'est-à-dire toutes les secondes en Europe), en prévoyant une impulsion de synchronisation transmise par l'émetteur dans une ligne spéciale de l'image (la dernière ligne d'une trame par exemple) ou dans la voie de transmission des données pendant les retours de trame (voir les systèmes dits Teletext, DIDON, etc). Les générateurs utilisés à l'émission et à la réception sont initialisés par une clé de départ, comportant un certain nombre de bits, et l'utilisateur peut soit acheter directement cette clé sous forme d'une carte de clé passive, soit acheter le moyen de déchiffrer une clé chiffrée transmise par l'émetteur dans la voie de diffusion de données.

De façon classique, les mémoires prévues dans de tels dispositifs sont à accès aiéatoire. Dans les réalisations intégrées, de telles mémoires occuperaient une surface de circuit intégré trop importante, et la demande de brevet français n° 2 431 809 citée plus haut prévoit alors d'utiliser (voir notamment le circuit à retard 3 sur la figure 3 de ce document) une mémoire série rebouclée sur elle-même pendant le déchiffrement de façon à renvoyer à la cadence d'horloge les échantillons présents à sa sortie vers son entrée. On conserve ainsi, par rapport aux mémoires à accès aléatoire, l'avantage d'une lecture qui peut commencer par n'importe quel point (dans le cas des circuits décrits en détail plus loin, une telle propriété est obtenue en faisant subir à chaque mémoire, entre les opérations d'écriture et de lecture, une opération supplémentaire de déchiffrement réalisée en rebouclant chaque mémoire sur elle-même et en envoyant un nombre d'impulsions d'horloge égal à $n_i - x_i$, si l'on appelle $n_i$ la longueur de la mémoire et $x_i$ l'abscisse à laquelle le signal vidéo a été coupé à l'origine, la longueur $n_i$ de la mémoire devant être rigoureusement égale au nombre de points utiles sur la ligne d'image, c'est-à-dire au nombre de points transmis par ligne diminué du nombre $\varepsilon$ de points qui ont été répétés, pour éviter les dégradations du signal liées aux transitions introduites lors du chiffrement). Cependant l'analyse plus détaillée des circuits décrits dans ladite demande révèle une certaine complexité du dispositif. En effet, les opérations d'écriture, de déchiffrement et de lecture sont réparties sur trois périodes lignes; ceci a pour conséquence, en particulier, l'obligation d'utiliser trois jeux de mémoires lorsque les signaux d'entrée et de sortie ne sont pas rigoureusement synchrones, ce qui se produit, entre autres, lorsque le standard d'émission est de type à composantes séparées.

Le but de l'invention est de diminuer cette complexité, notamment en réduisant les dimensions des circuits et le nombre des circuits à retard utilisés comme mémoires.

L'invention concerne à cet effet, dans un premier mode de réalisation, un dispositif de déchiffrement d'images de télévision brouillées à l'émission par application à des signaux vidéo à composantes séparées, par exemple des signaux à composantes analogiques de type MAC, de permutations circulaires à partir d'adresses $x_i$ de points de coupure délivrées par un générateur d'adresses numériques pseudoaléatoires, ce dispositif comprenant pour la remise en ordre des signaux permutés deux jeux de mémoires analogiques ou numériques de type série rebouclées sur elles-mêmes pendant le déchiffrement, ces jeux étant utilisés alternativement et comportant chacun autant de mémoires qu'on transmet de composantes séparées par ligne, et le nombre $n_i$ de cellules de chaque mémoires étant égal à la longueur du signal utile à laquelle on applique la permutation circulaire, ledit dispositif étant caractérisé en ce que la fréquence d'horloge pour le déchiffrement par décalage complémentaire du décalage opéré à l'émission est suffisamment élevée pour que la somme des durées des opérations d'écriture, de déchiffrement et de lecture des mémoires soit inférieure ou égale à deux périodes de ligne.

De façon similaire, l'invention concerne également un dispositif de déchiffrement d'images de télévision brouillées à l'émission par application à des signaux vidéo composites, de type SECAM, PAL ou NTSC par exemple, de permutations circulaires à partir d'adresses $x_i$ de points de coupure délivrées par un générateur d'adresses numériques pseudoaléatoires, ce dispositif comprenant pour la remise en ordre des signaux

2

permutés deux mémoires analogiques ou numériques de type série rebouclées sur elles-mêmes pendant le déchiffrement, et dont le nombre $n_i$ de cellules est égal à la longueur du signal utile à laquelle on applique la permutation circulaire, ledit dispositif étant caractérisé en ce que la fréquence d'horloge pour le déchiffrement par décalage complémentaire du décalage opéré à l'émission est suffisamment élevée pour que la somme des durées des opérations d'écriture, de déchiffrement et de lecture des mémoires soit inférieure ou égale à deux périodes de ligne.

Le choix approprié de la fréquence d'horloge pour le déchiffrement est en effet intéressant en ce sens que, si les limites proposées ci-dessus sont respectées, on ne consomme pas de mémoire supplémentaire.

Dans une variante de réalisation de l'invention ainsi définie, chaque mémoire comprend au moins une prise intermédiaire située à un certain nombre $p_i$ de cellules de son extrémité et choisie ou non comme sortie de cette mémoire selon la position de l'adresse de coupure $x_i$ par rapport au nombre $(n_i - p_i)$. Ainsi, lorsque la fréquence d'horloge pour le déchiffrement dans l'intervalle entre écriture et lecture des mémoires est trop élevée pour la technologie de mémoire série utilisée, il devient possible de réduire la fréquence nécessaire, en l'occurrence jusqu'à un facteur 2 si l'on choisit $p_i$ voisin de la moitié du décalage maximal possible.

On notera que, dans le cas d'un chiffrement opéré sur le signal composite SECAM, PAL ou NTSC, la permutation circulaire n'est appliquée que sur la partie utile de la ligne, en excluant donc la salve de chrominance et le palier de niveau du noir. La longueur des mémoires série doit alors être adaptée à la longueur utile des lignes et il est nécessaire de prévoir une autre mémoire, de type série de préférence, pour stocker la salve de chrominance et éventuellement l'impulsion de synchronisation.

Dans le cas d'un chiffrement opéré sur un signal MAC ou sur les composantes vidéo (Y, U, V) avant codage PAL, SECAM ou NTSC, la permutation circulaire est effectuée sur la longueur $n_i$ de ligne utile, en excluant les niveaux de référence qui précèdent: niveau du noir pour Y et niveau O pour U et V. Il est donc nécessaire, à la réception, de stocker ces valeurs, ce qui ne nécessite qu'une mise en mémoire de 7 bits pour chacun des niveaux. Lors de la restitution du signal, il suffit de faire précéder la période de lecture des mémoires d'un palier dont l'amplitude est déterminée par les bits mis en mémoire. Dans le cas du niveau du noir du signal, luminance, il n'est en général même pas nécessaire de stocker sa valeur car, pour utiliser pleinement la dynamique du convertisseur analogique-numérique, il est préférable d'effectuer l'alignement du signal luminance sur ce niveau du noir, juste avant numérisation.

Les particularités de cette invention, ainsi définies brièvement, vont apparaître de façon plus précise dans la description qui suit et dans les dessins annexés, donnés à titre d'exemple et dans lesquels:
- la figure 1 montre un exemple selon l'invention de réalisation d'un dispositif de déchiffrement adapté à des signaux vidéo brouillés de type MAC;
- la figure 2 illustre le principe d'utilisation d'une prise intermédiaire sur une mémoire $M_i$, qui permet de gagner jusqu'à un facteur 2 de réduction de la fréquence de déchiffrement;
- la figure 3 montre un exemple de réalisation du dispositif adapté au déchiffrement de signaux de type PAL après décodage;
- la figure 4 montre un exemple de réalisation du dispositif adapté au déchiffrement de signaux composites SECAM, PAL ou NTSC.

Dans le cas du déchiffrement d'un signal de type MAC, on prendra comme exemple un signal MAC-C (voir le rapport 118/82 diffusé par IBA, Independant Broadcasting Authority, Crawley Court, Winchester, Hants, Grande-Bretagne) dans lequel les longueurs utiles N des signaux sont respectivement de:
- 710 points transmis en 35 microsecondes pour la luminance;
- 355 points transmis en 17,5 microsecondes pour la chrominance;
ces signaux étant précédés par des périodes de référence de l'ordre de la microseconde. On supposera également, à titre d'exemple, sans qu'il s'agisse là d'une limitation de l'invention, que les segments répétés sont respectivement de longueurs 10 et 5 points, ce qui conduit à des dimensions des mémoires série de 700 points pour la luminance et 350 pour la chrominance. Lors de la réception du signal, la mise en mémoire commence, par exemple, au 5e point transmis et se termine au 354e pour la chrominance, et commence au 9e point transmis et se termine au 708e pour la luminance; on élimine ainsi les effets des échos inférieurs ou égaux à 0,2 microseconde pour la chrominance et à 0,4 microseconde pour la luminance.

On supposera enfin que l'on n'utilise qu'un seul générateur de séquences pseudoaléatoires à 8 sorties indépendantes permettant d'obtenir 256 valeurs d'adresse différentes $s = 0$ à 255. Comme il est préférable de ne pas effectuer les coupures au voisinage des bords de l'image, on peut choisir, par exemple, pour le signal chrominance de longueur utile 350, les 256 adresses comprises entre 64 et 319. Une façon simple d'obtenir $x_2$ est de prendre, par exemple:

$x_2 = s + 64$

On pourra choisir alors pour le signal luminance les adresses:

$x_1 = 2x_2 + 2s + 128$

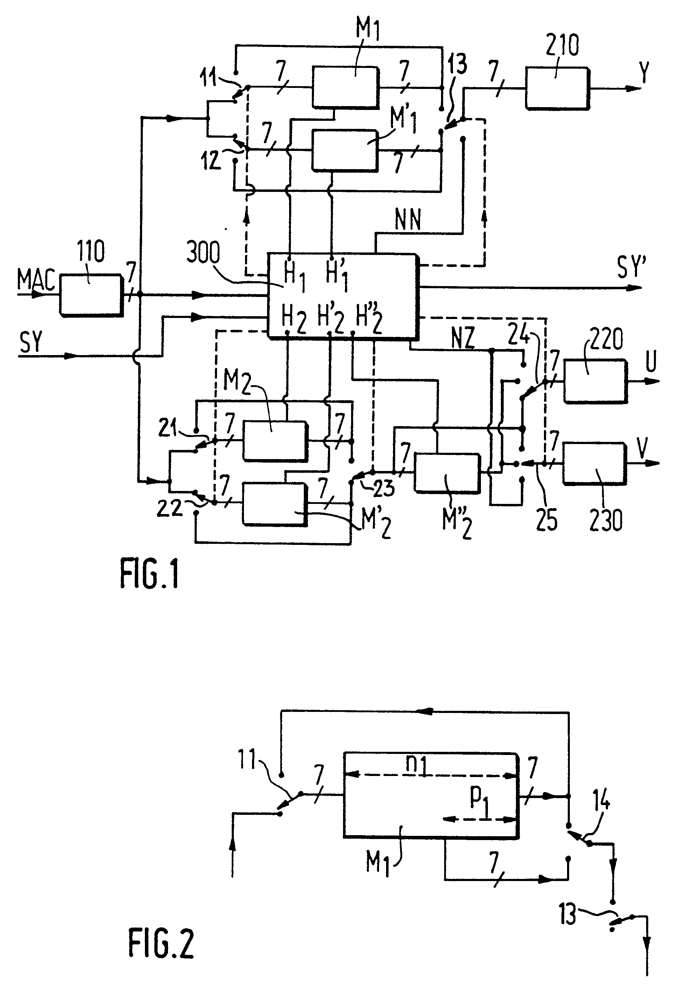

Le déchiffrement et le décodage des signaux sont possibles à l'aide du dispositif représenté sur la figure 1 et qui comprend les éléments essentiels d'un décodeur classique numérique de signaux vidéo de type MAC, utilisant selon l'invention des mémoires série auxquels sont associés d'une part des multiplexeurs permettant de connecter les entrées des mémoires à leurs sorties et d'autre part une modification du circuit horloge d'adressage des mémoires qui comprend maintenant un générateur de séquences numériques pseudoaléatoires et un circuit de contrôle d'accès et fournit les différents signaux d'horloge des mémoires et de commande des multiplexeurs.

3   .

Plus précisément, ce dispositif de déchiffrage est composé des éléments suivants:

(1) un circuit d'entrée:

(a) un convertisseur analogique-numérique 110 qui reçoit les signaux MAC brouillés et sort ici en 7 bits par exemple;

(2) des circuits de traitement de la composante de luminance:

(b) deux multiplexeurs 11 et 12 à deux entrées de 7 bits reliées à la sortie du convertisseur 110;

(c) un ensemble de deux voies en parallèle qui relient les sorties de ces multiplexeurs 11 et 12 aux entrées d'une première et d'une deuxième mémoire série $M_1$ et $M'_1$ de stockage de la composante de luminance, adressées alternativement par un circuit de commande de déchiffrement 300, les sorties de ces mémoires étant reliées d'une part à deux autres entrées de chacun des multiplexeurs 11 et 12 et d'autre part à deux des trois entrées d'un multiplexeur 13 dont la troisième entrée reçoit du circuit 300 un signal NN de niveau du noir;

(d) un premier convertisseur numérique-analogique 210 qui reçoit les 7 bits de sortie du multiplexeur 13 et délivre le signal de luminance couramment appelé Y; (3) des circuits de traitement de la composante de chrominance:

(e) deux multiplexeurs 21 et 22 à deux entrées de 7 bits reliées également à la sortie du convertisseur 110;

(f) un ensemble de deux voies en parallèle qui relient les sorties de ces multiplexeurs 21 et 22 aux entrées d'une troisième et d'une quatrième mémoire série $M_2$ et $M'_2$ de stockage de la composante de chrominance, adressées alternativement par le circuit 300, les sorties de ces mémoires étant reliées d'une part à deux autres entrées de chacun des multiplexeurs 21 et 22 et d'autre part aux deux entrées d'un multiplexeur 23, la sortie de ce multiplexeur 23 étant reliée d'une part à l'entrée d'une ligne à retard numérique constituée par une mémoire série $M''_2$ commandée par le circuit 300 pour retarder de la durée d'une ligne la composante de chrominance et d'autre part à la première série d'entrées respectivement d'un multiplexeur 24 et d'un multiplexeur 25 dont une deuxième série d'entrées reçoit la sortie de ladite mémoire $M''_2$ et dont la troisième série d'entrées reçoit du circuit 300 un signal NZ de niveau zéro de chrominance;

(g) des deuxième et troisième convertisseurs numériques-analogiques 220 et 230 qui reçoivent les 7 bits de sortie des multiplexeurs 24 et 25 respectivement et délivrent les signaux de différence de couleur couramment appelés U et V;

(4) un circuit de commande de déchiffrement 300 qui reçoit les 7 bits de sortie du convertisseur 110 et le signal de synchronisation SY et qui fournit les cinq signaux d'horloge $H_1$, $H'_1$, $H_2$, $H'_2$, $H''_2$, les commandes des multiplexeurs (représentées en trait interrompu), le niveau du noir NN, le niveau zéro de chrominance NZ et la synchronisation retardée SY', et qui comporte, outre les générateurs d'horloge, un générateur de séquences numériques pseudoaléatoires fonctionnant à la fréquence des lignes et un circuit de contrôle d'accès fournissant au générateur de séquences pseudoaléatoires un mot de départ constituant la clé de chiffrage (ce générateur reçoit la clé soit sous forme d'une clé passive soit sous forme chiffrée par le canal de diffusion de données).

Bien entendu il est également possible de partir d'un décodeur de signaux MAC utilisant des mémoires analogiques, de type à transfert de charges par exemple. Dans ce cas, le schéma de principe du décodeur déchiffreur reste très voisin de celui de la figure 1, la principale modification étant la suppression du convertisseur analogique-numérique 110 et des trois convertisseurs numériques-analogiques 210, 220, 230.

Le fonctionnement du circuit de commande de déchiffrement ainsi composé est le suivant. Le générateur de séquences pseudoaléatoires qui reçoit du circuit de contrôle d'accès la clé déchiffrée par celui-ci dès la réception des signaux MAC brouillés, génère un mot numérique aléatoire qui sert à calculer les deux abscisses $x_1$ et $x_2$ des points de fractionnement des composantes analogiques de chrominance et de luminance qui sont envoyées au générateur d'horloge.

Les temps d'écriture, à 20,25 MHz, des 700 points de la mémoire luminance $M_1$ et des 350 points de la mémoire chrominance $M_2$ sont respectivement de 34,6 et 17,3 microsecondes, l'écriture de la mémoire $M_1$ commençant 18,6 microsecondes après le début de l'écriture de la mémoire $M_2$ (la chrominance est émise avant la luminance à chaque ligne vidéo).

Les deux mémoires sont lues simultanément en 51,85 microsecondes à des fréquences d'horloge de 13,5 et 6,75 MHz respectivement. En réservant, par exemple, des marges minimales de 0,6 microseconde entre les opérations d'écriture (E), de déchiffrement (D) et de lecture (L), on dispose pour le déchiffrement de la luminance d'un maximum de 21,2 microsecondes qui suffisent pour effectuer le décalage maximum de 572 points à une fréquence de 27 MHz, égale au double de la fréquence de lecture.

Dans le cas où l'on a choisi, comme ci-dessus, des adresses proportionnelles pour la luminance et la chrominance:

$$\frac{x_1}{x_2} = \frac{n_1}{n_2} = 2$$

on obtient une simplification du dispositif en effectuant simultanément les déchiffrements des mémoires $M_1$ et $M_2$. En effet, il suffit alors de prévoir, pendant les opérations de déchiffrement et de lecture, un seul générateur de signaux d'horloge $H_1$, appliqué à la mémoire $M_1$, et de déduire le signal d'horloge $H_2$ appliqué à la mémoire $M_2$ en divisant par le signal $H_1$, c'est-à-dire en ne transmettant vers $M_2$ qu'une impulsion sur deux du train d'impulsions d'horloge $H_1$.

Les séquences appliquées aux différentes mémoires sur une période de 128 microsecondes égale à la durée de 2 lignes peuvent alors s'écrire, en notant en premier les durées, en notant entre parenthèses les fréquences des trains d'horloge appliqués, et en indiquant par E, D et L les périodes d'écriture, de déchiffrement et de lecture (ces séquences étant exprimées en microsecondes):

- Mémoire de luminance $M_1$:

$$H_1 = 19,2(O) + 34,6 \overset{E}{(20,25 \text{ MHz})} + 0,6(O) + \frac{x_1-x_{1m}}{27}(O) + \frac{\overset{D}{700-x_1}}{27} (27 \text{ MHz})$$

$$+ 0,6(O) + 51,8\overset{L}{(13,5 \text{ MHz})}$$

- Mémoire $M'_1$:
$H'_1 \equiv H_1$ avec un décalage de 64 microsecondes.
- Mémoire de chrominance $M_2$

$$H_2 = 0,6(O) + 17,3\overset{E}{(20,25 \text{ MHz})} + 36,5(O) + \frac{x_2-x_{2m}}{13,5} (O) + \frac{\overset{D}{350-x_2}}{13,5} (13,5\text{MHz})$$

$$+ 0,6(O) + 51,8\overset{L}{(6,75 \text{ MHz})}$$

- Mémoire $M'_2$
$H'_2 \equiv H_2$ avec un décalage de 64 microsecondes.

Dans ces expressions, $x_{1m}$ et $x_{2m}$ représentent les adresses de coupure minimales qui ont été choisies ici, comme indiqué précédemment, égales à 128 et 64 respectivement.

Dans le cas de signaux pour effectuer le décodage complet et obtenir simultanément les signaux U et V, il faut utiliser en outre une troisième mémoire $M''_2$ de 350 points, à laquelle on applique une séquence d'horloge propre à obtenir l'équivalent d'un retard de 64 microsecondes:

$$H''_2 = 12,2(O) + 51,8\overset{L/E}{(6,75 \text{ MHz})} + 12,2(O) + 51,8\overset{L/E}{(6,75 \text{ MHz})}$$

Dans le cas de signaux de type MAC-A, les durées de transmission de Y et de C sont plus longues, 38,8 et 19,4 microsecondes respectivement, car ils correspondent à une fréquence d'échantillonnage de 18 MHz (voir le rapport 112/82 de l'organisme IBA déjà cité). Pour effectuer le déchiffrement des mémoires luminance, il faut alors choisir une fréquence plus élevée, de l'ordre de 40 MHz. Cette fréquence peut d'ailleurs être choisie totalement librement, car seul importe le nombre d'impulsions de décodage appliquées à la mémoire, et non les intervalles qui les séparent, contrairement au cas des fréquences d'écriture et de lecture qui devront être dans un rapport rigoureux, par exemple 3/2 dans le cas du MAC-C et 4/3 dans le cas du MAC-A.

Dans l'hypothèse où la fréquence nécessaire au déchiffrement dans le laps de temps laissé libre entre écriture et lecture des mémoires serait trop élevée pour la technologie de mémoire série utilisée, une autre caractéristique de l'invention, illustrée sur la figure pour la mémoire $M_1$, permet de réduire jusqu'à un facteur 2 la fréquence nécessaire. Cette caractéristique de l'invention revient à prévoir, pour la mémoire $M_i$ considérée comportant $n_i$ cellules de 7 ou 8 bits, des prises intermédiaires à une distance de $p_i$ cellules de l'extrémité, ainsi qu'un multiplexeur 14 permettant de choisir comme sorties soit les 7 ou 8 sorties de la dernière cellule, soit les 7 ou 8 sorties correspondant aux prises intermédiaires.

Lorsque l'adresse de coupure $x_i$ est inférieure ou égale à $n_i - p_i$, on choisit pour sorties les prises intermédiaires et l'on obtient le déchiffrement en appliquant à la mémoire un nombre d'impulsions d'horloge égal à:

$y_i - p_i = n_i - p_i - x_i$

Lorsque $x_i$ est supérieur à $n_i - p_i$, ce sont les extrémités de la mémoire qui sont choisies comme sorties et l'on applique, comme précédemment, un nombre de coups d'horloge:

$y_i = n_i - x_i \leqslant p_i - 1$

Le nombre maximal de coups d'horlge est donc égal au plus grand des nombres $p_i - 1$ et $y_{iM} - p_i$. En choisissant $p_i$ voisin de $y_{iM}/2$, où $y_{iM}$ est le décalage maximal (572 pour Y dans le système MAC, dans l'exemple précédent), on obtient une réduction par un facteur voisin de 2 du nombre de coups d'horloge nécessaire et donc une réduction de la fréquence nécessaire au déchiffrement.

En pratique, on peut choisir $p_i$ tel que lui-même ou son complément $n_i - p_i$ soit facile à décoder en numération binaire, pour simplifier les circuits d'adressage, tout en gardant un facteur de réduction suffisant de la fréquence d'horlogé. Par ailleurs, on peut combiner le multiplexeur 14 (représenté sur la figure 2 pour la mémoire $M_1$ par exemple) et son homologue pour la mémoire $M'_1$, avec le multiplexeur 13 de la figure 1 en utilisant un multiplexeur à 5 jeux d'entrées (de 7 ou 8 bits), ces entrées étant respectivement: les extrémités $M_1$, les prises intermédiaires $M_1$, les extrémités $M'_1$, les prises intermédiaires $M'_1$, et le niveau du noir NN.

Dans le cas d'un signal chiffré MAC transcodé en SECAM en tête d'un réseau de télédistribution ou dans le cas d'un signal SECAM chiffré à l'émission avant codage, pour lequel le déchiffrement doit être effectué après décodage, le schéma de principe du déchiffreur reste très voisin de celui de la figure 1, la seule différence étant que les entrées des multiplexeurs 11 et 12 d'une part et 21 et 22 d'autre part sont reliées à deux convertisseurs analogiques-numériques différents recevant respectivement les signaux de luminance et ceux de chrominance. Dans ce cas les périodes d'écriture dans les mémoires $M_1$ et $M_2$ ou $M'_1$ et $M'_2$ sont simultanées et l'on utilise les mêmes fréquences qu'à la lecture soit 13,5 MHz pour $M_1$ et $M'_1$ et 6,75 MHz pour $M_2$ et $M'_2$ Comme l'écriture ne prend qu'un temps de 51,8 microsecondes, on peut conserver, pour le déchiffrement, les mêmes fréquences que dans le cas de signaux de type MAC-C et le même intervalle de séparation entre déchiffrement et lecture, pour faciliter la réalisation d'un décodeur compatible MAC-C/SECAM. Les séquences appliquées aux différentes mémoires peuvent devenir alors, par exemple, en étant toujours exprimées en microsecondes:

$$
\begin{aligned}
H_1 = 1.4(0) + 51.8\overset{E}{(13.5 \text{ MHz})} + 1.2(0) + \frac{x_1 - x_{1m}}{27}(0) + \overset{D}{\frac{700 - x_1}{27}}(27 \text{ MHz}) \\
+ 0,6(0) + 51,8\underset{L}{(13,5 \text{ MHz})}
\end{aligned}
$$

$H'_1 \equiv H_1$ avec décalage de 64 microsecondes.

$$
\begin{aligned}
H_2 = 1.4(0) + 51.8\overset{E}{(6.75 \text{ MHz})} + 1.2(0) + \frac{x_2 - x_{2m}}{13.5}(0) + \overset{D}{\frac{350 - x_2}{13.5}}(13.5 \text{ MHz}) \\
+ 0,6(0) + 51,8\underset{L}{(6,75 \text{ MHz})}
\end{aligned}
$$

$H'_2 \equiv H_2$ avec décalage de 64 microsecondes.

$$
H''_2 = 12.2(0) + 51.8\overset{L/E}{(13.5 \text{ MHz})} + 12.2(0) + 51.8\overset{L/E}{(13.5 \text{ MHz})}
$$

On peut remarquer que les signaux $H_2$ et $H'_2$ peuvent être déduits de $H_1$ et $H'_1$ par simple division par 2 des nombres de coups d'horloge.

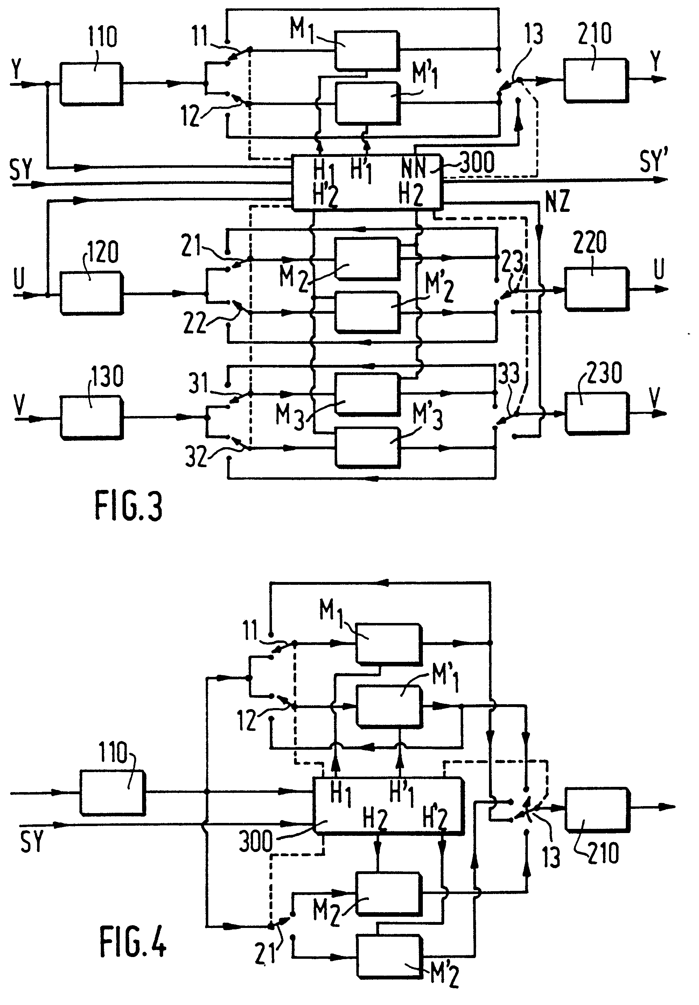

Dans le cas d'un signal chiffré MAC transcodé en PAL en tête d'un réseau de distribution, pour lequel le déchiffrement doit être également effectué après décodage, il est possible d'utiliser le même schéma, dérivé de celui de la figure 1, que dans le cas du SECAM, en utilisant le convertisseur analogique-numérique 110 pour numériser le signal luminance envoyé aux mémoires $M_1$ ou $M'_1$ et en ajoutant un deuxième convertisseur analogique-numérique 120 pour numériser le signal chrominance envoyé aux mémoires $M_2$ ou $M'_2$. Si par contre, on veut conserver la simultanéité des signaux U et V, le schéma du dispositif de déchiffrement devient celui de la figure 3, dans laquelle la mémoire retard $M''_2$ a disparu et où on a rajouté un troisième convertisseur analogique-numérique 130 et deux mémoires $M_3$ et $M'_3$. On utilise les mêmes signaux d'horloge que dans le cas du SECAM:

$H_1$ et $H'_1$ appliqués aux mémoires $M_1$ et $M'_1$ respectivement;

$H_2$ appliqué aux mémoires $M_2$ et $M_3$;

$H'_2$ appliqué aux mémoires $M'_2$ et $M'_3$.

Les convertisseurs analogiques-numériques 110, 120 et 130, à 7 bits par exemple, numérisent respectivement les signaux Y, U et V qui sont envoyés, par l'intermédiaire des multiplexeurs 11, 12, 21, 22, 31 et 32 vers les mémoires $M_1$ ou $M'_1$ (pour Y), $M_2$ ou $M'_2$ (pour U) et $M_3$ ou $M'_3$ (pour V). Après le déchiffrement, les convertisseurs numériques-analogiques 210, 220 et 230 reçoivent, par l'intermédiaire des multiplexeurs 13, 23 et

**0 126 495**

33, les signaux issus des mémoires $M_1$ ou $M'_1$ (pour 210), $M_2$ ou $M'_2$ (pour 220) et $M_3$ ou $M'_3$ (pour 230), ou les signaux NN (pour 210) et NZ (pour 220 et 230) issus du circuit de commande de déchiffrement 300.

Dans le cas d'un signal composite SECAM, PAL ou NTSC chiffré après codage, comme proposé dans la demande de brevet français n° 7 821 888 citée plus haut (TdF), le déchiffrement peut être réalisé également à l'aide de deux mémoires série. Si l'on prend par exemple des signaux SECAM ou PAL échantillonnés à la fréquence de 17,734 MHz égale à 4 fois la fréquence sous-porteuse du PAL, avec une durée de la partie soumise aux permutations circulaires de 51,3 microsecondes, correspondant à 910 échantillons, cette partie utile étant précédée d'une période de 11 microsecondes environ dans laquelle se trouvent l'impulsion de synchronisation et la salve de référence SECAM ou PAL, la figure 4 montre alors le schéma du dispositif de déchiffrement correspondant. Les mémoire $M_1$ et $M'_1$, qui comportent 910 cellules (de 7 ou 8 bits), reçoivent, par l'intermédiaire des multiplexeurs 11 et 12, la partie du signal qui a subi la permutation circulaire après numérisation par le convertisseur analogique-numérique 110. Elles sont écrites et lues à la fréquence de 17,734 MHz et peuvent être déchiffrées à une fréquence double. Dans le cas où cette fréquence de 35,468 MHz serait trop élevée, il serait possible de prévoir des prises sur les mémoires, selon le principe décrit précédemment et illustré sur la figure 2, en conservant alors pour le déchiffrement la fréquence de 17,734 MHz.

Comme le signal qui a subi le déchiffrement est retardé d'une durée égale à un peu plus d'une période ligne, il est nécessaire de faire subir ce même retard à la salve de référence utilisée en SECAM, PAL ou NTSC et au signal de synchronisation. Ceci est obtenu, sur la figure 4, en aiguillant le signal numérisé alternativement vers deux mémoires série $M_2$ et $M'_2$ par l'intermédiaire du multiplexeur 21. En sortie, le multiplexeur 13 choisit successivement les sorties des mémoires : $M_2$, $M_1$, $M'_2$ et $M'_1$ et les envoie vers le convertisseur numérique-analogique 210 à la sortie duquel on retrouve le signal composite SECAM ou PAL.

La capacité minimale de chacune des mémoires $M_2$ et $M'_2$ est de 93 cellules (de 7 ou 8 bits). Cependant, comme le signal composite de sortie doit comporter obligatoirement le signal de synchronisation et que, en raison du décalage utilisé pour le déchiffrement, les impulsions de synchronisation ne coïncident pas en entrée et en sortie, il est préférable de mettre en mémoire également une période de l'ordre de 6 microsecondes précédant la salve, ce qui porte à environ 200 cellules la capacité des mémoires $M_2$ et $M'_2$ et correspond à une durée de signal de 11,3 microsecondes.

Si l'on prend, par exemple, une réalisation dans laquelle l'adresse minimale $x_m$ est égale à 128 - 93 = 35, le décalage maximal atteint:

$$y_m - 910 - 35 = 875$$

et il demande, à la fréquence de 35,468 MHz, une durée de 24,7 microsecondes. Les séquences d'horloge (en microsecondes) appliquées aux 4 mémoires peuvent être choisies, par exemple:

$$H_1 = 51,3(\underset{E}{17,734 \text{ MHz}}) + 0,2(0) + \underset{L}{\frac{x-35}{35,468}}(0) + \frac{910-x}{35,468}(\underset{D}{35,468 \text{ MHz}})$$
$$+ 0,2(0) + 51,3(17,734 \text{ MHz}) + 0,3(0)$$

$H' \equiv H_1$ svec décalage de 64 microsecondes.

$$H_2 = 65,1(0) + 11,3(\underset{L}{17,734 \text{ MHz}}) + 39,85(0) + 11,3(\underset{E}{17,734 \text{ MHz}}) + 0,45(0)$$

$H'_2 \equiv H_2$ avec décalage de 64 microsecondes.

On peut remarquer que le déchiffrement demanderait le même laps de temps maximal à la fréquence de 17,734 MHz, en prévoyant des prises distantes de 437 ou 438 cellules de l'extrémité (fig.2).

Pendant l'intervalle de suppression de trame, qui dure 25 ou 26 lignes, pendant lequel les signaux ne doivent pas être chiffrés, on peut concevoir un fonctionnement identique à celui qui vient d'être décrit en faisant simplement toujours x = 910 ou en supprimant simplement la fréquence 35,468 MHz pendant cet intervalle de suppression. On doit noter cependant que les signaux restitués en sortie sont décalés d'une ligne, comme dans le cas des signaux de l'image chiffrée. Il peut arriver que l'on ne veuille pss appliquer ce décalage d'une ligne pendant l'intervalle de suppression trame, pour des raisons liées à la présence de signaux numériques, de signaux tests ou de signaux d'identification couleur en SECAM. On peut alors ne pas faire passer le signal dans les mémoires pendant cet intervalle. Cependant, on s'aperçoit, d'après les signaux d'horloge ci-dessus, que les tops de synchronisation ligne sont restitués en sortie avec un retard voisin de 12,7 microsecondes par rapport à leur position à l'entrée du déchiffreur. Pour ne pas avoir de problème de synchronisation, il faut donc appliquer un retard de 12,7 microsecondes à tous les signaux compris dans l'intervalle de suppression trame, ce qui peut

7

être réalisé à l'aide d'une mémoire série de 225 cellules (x 8 bits) attaquée par l'horloge à 17,734 MHz pendant tout l'intervalle de suppression trame. Ceci ne nécessite pss l'emploi de mémoire supplémentaire si l'on porte à 225 cellules (x 8 bits) la capacité des mémoires $M_2$ et $M'_2$, qui peuvent être utilisées à cet usage pendant la suppression trame. Pendant la durée d'image utile, les séquences appliquées aux mémoires $M_2$ et $M'_2$ deviennent alors (en microsecondes):

$$H_2 = 63,7(0) + \overset{L}{12,7(17,734 \text{ MHz})} + 38,45(0) + \overset{E}{12,7\ (17,734 \text{ MHz})} + 0,45(0)$$

$H'_2 = H_2$ avec décalage de 64 microsecondes.

Bien entendu, dans le cas où la longueur du décalage maximal de déchiffrement $y_m$ serait telle que celui-ci ne puisse être effectué dans le temps imparti à la fréquence de 17,734 MHz (mémoires avec prises) ou au double de cette fréquence, il est possible de choisir une fréquence légèrement supérieure puisqu'il n'y a pas d'obligation de verrouiller entre elles les fréquences d'écriture et de déchiffrement.

Dans le cas d'un signal composite NTSC chiffré, le même schéma de principe, décrit sur la figure 4, peut être utilisé en adaptant les dimensions des et les fréquences d'échantillonnage à ce standard. En fait, il est possible d'utiliser les mêmes mémoires que pour le SECAM et le PAL et des fréquences très proches si l'on choisit, comme fréquence d'échantillonnage d'écriture et de lecture, 5 fois la fréquence sous-porteuse NTSC soit 17,898 MHz. Le déchiffrement se ferait alors, comme précédemment, soit au double de cette fréquence, soit également à cette fréquence si l'on aprévu des prises intermédiaires sur les mémoires $M_1$ et $M'_1$, ou à des fréquences légèrement supérieures si le temps nécessaire au déchiffrement le nécessite.

L'utilisation de mémoires série pour retarder les signaux pendant l'intervalle de suppression de trame, qui vient d'être décrite dans le cas d'un signal composite, peut s'envisager aussi dans le cas de composantes séparées. En particulier, dans le cas de signaux codés ou transcodés en SECAM ou PAL, il est important de restituer convenablement les signaux de synchronisation trame avec leurs impulsions d'égalisation. Comme dans le cas du signal composite, une première solution consiste à écrire les signaux dans les mémoires et à les lire sans avoir appliqué d'impulsions de décalage pendant la période de déchiffrement. On obtient ainsi le même retard, légèrement supérieur à une période ligne, que pour les signaux image chiffrés. Une deuxième solution consiste à ne retarder les signaux que de 11 microsecondes environ à l'aide d'une mémoire série de capacité voisine de 150 cellules, par exemple, à laquelle on applique la fréquence horloge de 13,5 MHz. Cette même mémoire pourrait d'ailleurs être également utilisée, pendant la période image chiffrée, pour fournir le signal de synchronisation ligne SY' qui est retardé de 11 microsecondes environ par rapport au signal de synchronisation initial SY, fonction qui était assurée par le circuit de commande de déchiffrement 300 sur la figure 3, dans le cas du déchiffrement des trois composantes séparées, par exemple. Lorsque la génération des impulsions de synchronisation ligne est assurée par le circuit de commande 300, il est possible d'utiliser les mémoires $M_2$ et $M'_2$ (ou $M_3$ et $M'_3$) pour assurer le retard de 11 microsecondes pendant l'intervalle de suppression de trame, en munissant ces mémoires des prises convenables et en prévoyant des multiplexeurs pour l'aiguillage des signaux.

**Revendications**

1. Dispositif de déchiffrement d'images de télévision brouillées à l'émission par application à des signaux vidéo à composantes séparées, par exemple des signaux à composantes analogiques de type MAC, de permutations circulaires à partir d'adresses $x_i$ de points de coupure délivrées par un générateur d'adresses numériques pseudoaléatoires, ce dispositif comprenant pour la remise en ordre des signaux permutés deux jeux de mémoires analogiques ou numériques de type série rebouclées sur elles-mêmes pendant le déchiffrement, ces jeux étant utilisés alternativement et comportant chacun autant de mémoires qu'on transmet de composantes séparées par ligne, et le nombre $n_i$ de cellules de chaque mémoire étant égal à la longueur du signal utile à laquelle on applique la permutation circulaire, ledit dispositif étant caractérisé en ce que la fréquence d'horloge pour le déchiffrement par décalage complémentaire du décalage opéré à l'émission est suffisamment élevée pour que la somme des durées des opérations d'écriture, de déchiffrement et de lecture des mémoires soit inférieure ou égale à deux périodes de ligne.

2. Dispositif de déchiffrement d'images de télévision brouillées à l'émission par application à des signaux vidéo composites, de type SECAM, PAL ou NTSC par exemple, de permutations circulaires à partir d'adresses $x_i$ de points de coupure délivrées par un générateur d'adresses numériques pseudoaléatoires, ce dispositif comprenant pour la remise en ordre des signaux permutés deux mémoires analogiques ou numériques de type série rebouclées sur elles-mêmes pendant le déchiffrement et dont le nombre $n_i$ de cellules est égal à la

**0 126 495**

longueur du signal utile à laquelle on applique la permutation circulaire, ledit dispositif étant caractérisé en ce que la fréquence d'horloge pour le déchiffrement par décalage complémentaire du décalage opéré à l'émission est suffisamment élevée pour que la somme des durées des opérations d'écriture, de déchiffrement et de lecture des mémoires soit inférieure ou égale à deux périodes de ligne.

3. Dispositif selon l'une des revendications 1 et 2, caractérisé en ce que chaque mémoire comprend au moins une prise intermédiaire située à un certain nombre $p_i$ de cellules de son extrémité et choisie ou non comme sortie de cette mémoire selon la position de l'adresse de coupure $x_i$ par rapport au nombre $(n_i - p_i)$.

4. Dispositif selon la revendication 3, caractérisé en ce que le nombre de cellules $p_i$ est choisi voisin de la moitié du décalage maximal $y_{iM} = n_i - x_{im}$, $x_{im}$ étant le décalage minimal appliqué à l'émission.

5. Dispositif selon l'une des revendication 1 à 4, caractérisé en ce que la fréquence d'horloge utilisée lors du déchiffrement d'une mémoire est choisie multiple de ou dans un rapport simple avec la fréquence d'écriture ou la fréquence de lecture de cette mémoire.

6. Dispositif selon la revendication 1 ou l'une des revendications 3 à 5 lorsque ces dernières dépendent de la revendication 1, dans lequel chacun des deux jeux de mémoires de type série utilisés alternativement comprend deux mémoires de longueur $n_i$ et $n_2$, $n_1$ étant un multiple $m$ de $n_2$, et les adresses de coupures $x_1$ et $x_2$ étant choisies telles que $x_2 = x_1/m$, caractérisé en ce que le déchiffrement desdites composantes s'effectue simultanément à partir d'une même horloge H en appliquant directement le signal issu de cette horloge à la première de ces mémoires et un signal obtenu par division par $m$ du signal précédent à la deuxième de ces mémoires.

7. Dispositif selon la revendication 1 ou l'une des revendication 3 à 5 lorsque ces dernières dépendent de la revendication 1, dans lequel chacun des deux jeux de mémoires de type série utilisés alternativement comprend trois mémoires de longueurs $n_1$, $n_2$ et $n_3$, la longueur $n_2$ étant égale à $n_3$ et la longueur $n_1$ étant un multiple $m$ de $n_2$ et les adresses de coupure $x_1$, $x_2$ et $x_3$ étant choisies telles que $x_2 = x_3 = x_1/m$, caractérisé en ce que le déchiffrement desdites composantes s'effectue simultanément à partir d'une même horloge H en appliquant directement le signal issu de cette horloge à la première de ces mémoires et un signal obtenu par division par $m$ du signal précédent aux deuxième et troisième mémoires.

8. Dispositif selon l'une des revendications 6 et 7, caractérisé en ce qu'en dehors des périodes de lecture des mémoires on ajoute à leurs signaux de sortie, pour le ou les signaux de chrominance, un signal correspondant au niveau zéro de chrominance, et, pour le signal de luminance, un signal comprenant un niveau du noir et éventuellement une impulsion de synchronisation présentant le décalage convenable par rapport aux signaux utiles.

9. Dispositif selon l'une des revendications 6 à 8, caractérisé en ce qu'il comprend une mémoire série supplémentaire utilisée pendant l'intervalle de suppression trame, de façon continue, pour retarder les signaux et les restituer en phase avec les signaux de synchronisation de sortie.

10. Dispositif selon la revendication 9, caractérisé en ce que cette mémoire série supplémentaire est constituée par l'une des deuxième ou troisième mémoires et en ce que la ou les mémoires utilisées comportent des prises pour obtenir le retard demandé.

11. Dispositif selon la revendication 2 ou l'une des revendications 3 à 5, lorsque ces dernières dépendent de la revendication 2, caractérisé en ce que le signal composite comprend une salve, transmise avant la partie visible du signal à laquelle est appliquée la permutation circulaire, et en ce que cette salve et l'impulsion de synchronisation ligne qui la précède sont stockées alternativement dans deux mémoires de type série qui sont relues juste avant la lecture des mémoires contenant le signal image utile correspondant.

12. Dispositif selon la revendication 11, caractérisé en ce que, pendant l'intervalle de suppression de trame, les mémoires de salve sont utilisées de façon continue pour retarder les signaux et les restituer en phase avec les signaux de synchronisation de sortie, et en ce que, pour obtenir le retard exact, on choisit des mémoires de salve correspondant à cette durée et donc de capacité plus grande que ce qui serait strictement nécessaire pour mettre en mémoire la salve et le signal de synchronisation.

**Patentansprüche**

1. Anordnung zum Entschlüsseln von Fernsehbildern, die bei der Übertragung verschlüsselt worden sind, indem die Video-Signale, die aus einzelnen Anteilen bestehen, z.B. Signale mit analogen Anteilen von dem MAC-Typ, zyklischen Permutationen ausgesetzt werden, ausgehend von Adressen $x_i$ von Trennstellen, die von einem Generator geliefert werden, der digitale pseudozufällige Adressen liefert, wobei diese Anordnung zum Neuordnen der permutierten Signale zwei Sätze von Analog- oder Digitalspeichern vom Reihentyp aufweist, deren Ausgänge während der Entschlüsselung mit ihren Eingängen verbunden sind, wobei diese Sätze wechselweise verwendet werden und je ebensoviele Speicher aufweisen wie es einzelne übertragene Anteile für jede Zeile gibt und wobei die Anzahl $n_i$ der Zellen jedes Speichers der Länge des Nutzsignals, an dem die zyklische Permutation durchgeführt wird, entspricht, dadurch gekennzeichnet, dass die Taktimpulsfrequenz für den Entschlüsselungsvorgang mittels einer Verschiebung, die zu der Verschiebung, die bei der Übertragung durchgeführt wird, komplementär ist, gross genug ist um zu gewährleisten, dass die Summe der Dauern der Schreib-, der Entschlüsselungs- und der Speicherauslesevorgänge kürzer ist als zwei Zeilenperioden oder dem Wert von zwei Zeilenperioden entspricht.

2. Anordnung zum Entschlüsseln von Fernsehbildern, die bei der Übertragung verschlüsselt worden sind, indem die zusammengestellten Video-Signale von dem z. B. SECAM-, PAL- oder NTSC-Typ zyklischen Permutationen ausgesetzt werden, ausgehend von Adressen $x_i$ von Trenstellen, die von einem Generator geliefert werden, der digitale pseudozufällige Adressen liefert, wobei diese Anordnung zum Neuordnen der permutierten Signale zwei Sätze von Analog- oder Digitalspeichern vom Reihentyp aufweist, deren Ausgänge während der Entschlüsselung mit ihren Eingängen verbunden sind, und wobei die Anzahl der Zellen $n_i$ der Länge des Nutzsignals entspricht, an dem die zyklische Permutation durchgeführt wurde, dadurch gekennzeichnet, dass die Taktimpulsfrequenz für den Entschlüsselungsvorgang mittels einer Verschiebung, die zu der Verschiebung, die bei der Übertragung durchgeführt wird, komplementär ist, gross genug ist um zu gewährleisten, dass die Summe der Dauern der Schreib-, der Entschlüsselungs- und der Speicherauslesevorgänge kürzer ist als zwei Zeilenperioden oder dem Wert von zwei Zeilenperioden entspricht.

3. Anordnung nach einem der Ansprüche 1 und 2, dadurch gekennzeichnet, dass jeder Speicher wenigstens einen Zwischenabgriff aufweist, der um eine bestimmte Anzahl Zellen $p_i$ von dem Ende vorgesehen ist und ggf. als Ausgang dieses Speichers gewählt worden ist und zwar anhängig von der Position der Adresse der Trennung $x_i$ gegenüber der Zahl ($n_i$ - $p_i$).

4. Anordnung nach Anspruch 3, dadurch gekennzeichnet, dass die Anzahl Zellen $p_i$ etwa zur Hälfte der maximalen Verschiebung $y_{iM} = n_i$ - $x_{im}$, wobei $x_{im}$ die minimale Verschiebung bei der übertragung ist.

5. Anordnung nach Anspruch 1 bis 4, dadurch gekennzeichnet, dass die Taktimpulsfrequenz, die bei der Entschlüsselung eines Speichers verwendet wird, als ein Vielfaches der Schreibe- oder der Lesefrequenz dieses Speichers gewählt worden ist oder in einem einfachen Verhältnis dazu steht.

6. Anordnung nach Anspruch 1 oder einem der Ansprüche 3 bis 5, wenn diese letztgenannten Ansprüche von dem Anspruch 1 abhängig sind, wobei jeder der zwei wechselweise verwendeten Sätze von Speichern vom Reiehntyp zwei Speicher mit der Länge $n_i$ und $n_2$ aufweisen, wobei $n_1$ ein Vielfaches m von $n_2$ ist und die Adressen der Trennungen $x_1$ und $x_2$ derart gewählt worden sind, dass $x_2 = x_1/m$ ist, dadurch gekennzeichnet, dass die Entschlüsselung der genannten Anteile gleichzeitig von demselben Taktimpulsgenerator H dadurch durchgeführt wird, dass das von diesem Taktimpulsgenerator gelieferte Signal unmittelbar dem ersten dieser Speicher zugeführt wird und ein durch Teilung des vorhergehenden Signals durch m erhaltene Signal dem zweiten dieser Speicher zugeführt wird.

7. Anordnung nach Anspruch 1 oder einem der Ansprüche 3 bis 5, wenn diese letztgenannten Ansprüche von dem Anspruch 1 abhängig sind, wobei jeder der zwei wechselweise verwendeten Sätze von Speichern vom Reihentyp drei Speicher mit der Länge $n_1$, $n_2$ und $n_3$ aufweist, wobei die Länge $n_2$ der Länge $n_3$ entspricht und die Länge $n_1$ ein Vielfaches m von $n_2$ ist und die Adressen der Trennungen $x_1$, $x_2$ und $x_3$ derart gewählt worden sind, dass $x_2$ $x_3 = x_1/m$ ist, dadurch gekennzeichnet, dass die Entschlüsselung der genannten Anteile gleichzeitig von demselben Taktimpulsgenerator H durchgeführt wird, indem das von diesem Taktimpulssignalgenerator gelieferte Signal unmittelbar dem ersten dieser Speicher zugeführt wird und ein durch Teilung des vorhergehenden Signals durch m erhaltene Signal dem zweiten und dritten Speicher zugeführt wird.

8. Anordnung nach einem der Ansprüche 6 und 7, dadurch gekennzeichnet, dass ausserhalb der Speicherausleseperioden zu den Ausgangssignalen der Speicher für das (die) Farbartsignal(e) ein Signal addiert wird, das dem Null-Farbartpegel entspricht und für das Leuchtdichtesignal ein Signal, das einem Schwarzpegel entspricht und ggf. einen Synchronimpuls, der die geeignete relative Verschiebung gegenüber den Nutzsignalen darstellt.

9. Anordnung nach einem der Ansprüche 6 bis 8, dadurch gekennzeichnet, dass sie einen zusätzlichen Reihenspeicher aufweist, der während der Bildaustastperiode ständig verwendet wird, und zwar zum Verzögern der Signale und um sie mit den Ausgangssynchronsignalen phasengleich zu machen.

10. Anordnung nach Anspruch 9, dadurch gekennzeichnet, dass dieser zusätzliche Reihenspeicher durch einen der zweiten oder dritten Speicher gebildet wird und dass der (die) verwendete(n) Speicher Anschlüsse aufweist zum Erzielen der erforderlichen Verzögerung.

11. Anordnung nach Anspruch 2 oder einem der Ansprüche 3 bis 5, wenn die letztgenannten Ansprüche von Anspruch 2 abhängig sind, dadurch gekennzeichnet, dass das zusanmengestellte Signal eine Salve aufweist, die vor dem sichtbaren Teil des Signals, an dem zyklische Permutation durchgeführt wird, übertragen wird und dass diese Salve und der Zeilen-Synchromimpuls, der dieser Salve vorhergeht, wechselweise in zwei Speichern vom Reihentyp gespeichert werden, die ausgelesen werden gerade bevor die Speicher, die das entsprechende Nutzbildsignal enthalten, ausgelesen werden.

12. Anordnung nach Anspruch 11, dadurch gekennzeichnet, dass während der Bildaustastperiode die Salvespeicher ständig verwendet werden zum Verzögern der Signale und um diese mit den Ausgangssynchronsignalen phasengleich zu machen und dass zum Erzielen der genauen Verzögerung Salvespeicher gewählt werden, die dieser Dauer entsprechen und deren Kapazitäf grösser ist als zum Laden des Impulsstosses und des Synchronsignals in den Speicher unbedingt notwendig ist.

## Claims

1. An arrangement for deciphering television pictures which were scrambled at transmission, by submitting the video signals consisting of separate components, for example signals having analog components of the MAC type to cyclic permutations from the addresses $x_i$ of points of cut produced by a pseudo-random digital address generator, the arrangement comprising for recreating the permuted signals two sets of analog or digiral memories of the serial type whose outputs are connected to their inputs during the deciphering, these sets being used alternately and each comprising as many memories as there are separate components transmitted for each line, and the number $n_i$ of cells of each memory being equal to the length of the useful signal on which the circular permutation is effected, the said arrangement being characterized in that the clock frequency for the deciphering operation by means of a shift which is complementary to the shift effected at transmission is sufficiently high to ensure that the sum of the durations of the writing, the deciphering and the memory reading operations is less than or equal to two line periods.

2. An arrangement for deciphering television pictures which were scrambled at transmission by submitting the composite video signals of, for example, the SECAM, PAL or NTSC type to cyclic permutations from addresses $x_i$ of points of cut produced by a pseudo-random digital address generator, this arrangement comprising for recreating the permuted signals two analog or digital memories of the serial type whose outputs are connected to their inputs during the deciphering and whose number ni of cells is equal to the length of the useful signal on which the cyclic permutation is effected, the said arrangement being characterized in that the clock frequency for the deciphering operation by means of a shift complementary to the shift effected at transmission is sufficiently high to ensure that the sum of the durations of the writing, the deciphering and the memory reading operations are less than or equal to two line periods.

3. An arrangement as claimed in one of the Claims 1 and 2, characterized in that each memory has at least an intermediate terminal located at a certain number $p_i$ of cells from its end and chosen or not chosen to be the output of this memory depending on the position of the address of the line cut $x_i$ relative to the number $(n_i-p_i)$.

4. An arrangement as claimed in Claim 3, characterized in that the number of cells $p_i$ is chosen at approximately half the maximum shift $y_{iM} = n_i - x_{im}$, $x_{im}$ being the minimum shift applied at transmission.

5. An arrangement as claimed in any of the Claims 1 to 4, characterized in that the clock frequency used during deciphering of a memory is chosen to be a multiple of or to be in a simple ratio to the writing frequency or the reading frequency of this memory.

6. An arrangement as claimed in Claim 1 or any of the Claims 3 to 5 when these last-mentioned Claims depend on Claim 1, in which each of the two sets of memories of the serial type used alternately comprises two memories of the lengths $n_1$ and $n_2$, $n_1$ being a multiple m of $n_2$ and the addresses of the line cuts $x_1$ and $x_2$ being chosen such that $x_2 = x_1/m$, characterized in that deciphering the said components is effected simultaneously from a same clock H by applying the signal supplied by this clock directly to the first of these memories and a signal obtained by dividing the preceding signal by m to the second of these memories.

7. An arrangement as claimed in Claim 1 or any of the Claims 3 to 5, when these last-mentioned Claims depend on Claim 1, in which each one of the two sets of memories of the serial type used alternately comprises three memories of the lengths $n_1$, $n_2$ and $n_3$, the length $n_2$ being equal to $n_3$ and the length $n_1$ being a multiple m of $n_2$, and the addresses of the line cuts $x_1$, $x_2$ and $x_3$ being chosen such that $x_2 = x_3 = x_1/m$, characterized in that deciphering the said components is effected simultaneously from a same clock H by applying the signal transmitted by this clock directly to the first one of these memories and a signal obtained by dividing the preceding signal by m to the second and third memories.

8. An arrangement as claimed in one of the Claims 6 and 7 characterized in that outside the memory reading periods there are added to their output signals for the chrominance signal (s) a signal corresponding to the zero chrominance level and for the luminance signal a signal comprising a black level and possibly a synchronizing pulse presenting the appropriate shift relative to the useful signals.

9. An arrangement as claimed in any of the Claims 6 to 8, characterized in that it comprises an additional serial memory used during the field blanking period, in a continuous way, to delay the signals and to recover them in phase with the output synchronising signals.

10. An arrangement as claimed in Claim 9, characterized in that this additional serial memory is formed by one of the second or third memories and in that the memory (ies) used comprise terminals to accomplish the required delay.

11. An arrangement as claimed in Claim 2 or any of the Claims 3 to 5, when these last-mentioned Claims depend on Claim 2, characterized in that the composite signal comprises a burst which is transmitted before the visible portion of the signal on which cyclic permutation is ef fected and in that this burst and the line synchronizing pulse preceding it are stored alternately in two memories of the serial type which are read just before the memories comprising the corresponding useful picture signal are read.

12. An arrangement as claimed in Claim 11, characterized in that during the field blanking period the burst memories are used in a continuous way for delaying the signals and for recovering them in phase with the output synchronizing signals, and in that, to accomplish the precise delay, burst memories are chosen which correspond to this duration and whose capacity is greater than strictly necessary for loading the burst and the synchronizing signal into the memory.

FIG.1

FIG.2

FIG.3

FIG.4